Europäisches Patentamt

European Patent Office

Office européen des brevets

(11) Publication number:

**0 082 638**
**B1**

## (12) EUROPEAN PATENT SPECIFICATION

(45) Date of publication of patent specification: **05.03.86**

(21) Application number: **82306560.2**

(22) Date of filing: **09.12.82**

(51) Int. Cl.⁴: **F 16 C 11/06**

(54) Ball and socket joints.

(30) Priority: **23.12.81 GB 8138803**

(43) Date of publication of application:
**29.06.83 Bulletin 83/26**

(45) Publication of the grant of the patent:
**05.03.86 Bulletin 86/10**

(84) Designated Contracting States:
**DE FR IT SE**

(56) References cited:
**DE-A-2 235 172**
**DE-C- 670 444**
**DE-U-7 127 341**
**GB-A- 973 615**
**US-A-2 564 938**
**US-A-3 058 765**
**US-A-3 073 634**
**US-A-3 108 830**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Ebbutt, Alan Norman**
**105 St. Leonards View**
**Dordon Tamworth Staffordshire (GB)**
Inventor: **Lidstone, Paul Frederick**
**Shrieves House Sheriffs Lench**
**Evesham Worcestershire (GB)**

(74) Representative: **Farrow, Robert Michael et al**
**Patent Department Automotive Products plc**
**Tachbrook Road**
**Leamington Spa Warwickshire CV31 3ER (GB)**

Courier Press, Leamington Spa, England.

Description

The invention relates to ball and socket joints of the kind (hereinafter called the kind referred to) comprising a cup-shaped housing, a ball pin having a shank extending through the open end of the housing and a part-spherical head, a bearing cup located in the housing and having a part-spherical bearing surface for supporting the ball head for pivotal and rotational movement of the ball pin, and an annular seal in contact with the head positioned between the open end of the housing and the bearing surface.

US—A—3 058 765 discloses a ball and socket joint of the kind referred to in which the cup-shaped housing is formed by a first pressing and a second pressing integral with an inturned lip which retains the annular seal. The part spherical head of the ball pin is enclosed in a boot comprising woven polytetrafluoroethylene within an outer layer of cotton fabric and resin, the boot covered head being disposed in the annular seal in the second pressing before the housing is assembled by welding the first pressing to the second. Then the bearing cup is created by injecting low friction hardenable material into the housing interior through a hole in the first pressing to occupy the space between the boot, seal and housing, the joint pin being pulled to axially compress the seal during the injection and setting of the hardenable material so that when the bearing cup has hardened the compressed seal pre-loads the ball against the bearing cup. The production process is somethat complicated and also care must be taken in positioning the ball whilst the bearing cup is being moulded in situ to ensure the ball is not off-set and cause the bearing cup to have an excessively thin place or hole in its side wall.

It is an object of the invention to provide a ball and socket joint of the kind referred to which is simple in construction and assembly.

According to a first aspect of the invention, there is provided a ball and socket joint of the kind referred to characterised in that the seal is retained by a resilient retaining ring which is radially deformable to snap-fit over the exterior of the bearing cup, the retaining ring retaining the seal when the bearing cup, the seal, the retaining ring, and the ball pin are assembled in the housing.

In an embodiment of the invention the retaining ring has internal surfaces which support and locate the seal against the rim of the bearing cup and a rim portion engages a rim portion of the bearing radially inwardly on the rim portion of the retaining ring engages with a corresponding external recess in the rim portion of the bearing cup. Preferably the radial projection comprises an annular rib and the corresponding recess comprises an annular groove.

According to a second aspect of the invention there is provided a ball and socket joint of the kind referred to characterised in that the bearing surface has an integral wall portion which is resiliently radially inwardly deformable and the seal is retained by inward deformation of the wall portion upon mounting of the bearing cup, the seal, and the ball pin in the housing.

In an embodiment of the second aspect of the invention the wall portion is a groove wall which is flared outwardly when the bearing cup is in its free state before insertion in the housing. Preferably the groove wall has axial slots.

According to a third aspect of the invention there is provided an assembly of use in a ball and socket joint according to the first aspect of the invention, the assembly comprising
(i) the ball pin,
(ii) the bearing cup,
(iii) the annular seal, and
(iv) the resiliently deformable retaining ring;
said assembly being intended to be fitted in a cup-shaped housing to form the ball and socket joint according to the first aspect of the invention.

According to a fourth aspect of the invention there is provided an assembly for use in a ball and socket joint according to the second aspect of the invention, the assembly comprising
(i) the ball pin,
(ii) the bearing cup, and
(iii) the annular seal;
said assembly being intended to be fitted in a cup-shaped housing to form a ball and socket joint according to the second aspect of the invention.

Examples of the invention will now be described with reference to the accompanying drawings, of which:—

Fig 1 is a cross-section of an embodiment of one example of a ball and socket joint formed according to the first aspect of the invention:

Fig 2 is an expanded section showing certain of the components illustrated in Fig 1, drawn to a larger scale:

Fig 3 is a cross-section of an embodiment of a ball and socket joint formed according to the second aspect of the invention:

Fig 4 is an expanded section showing certain of the components illustrated in Fig 3, drawn to a larger scale;

Fig 5 is a cross-section of another embodiment of a ball and socket point formed according to the second aspect of the invention, and

Fig 6 is a cross-section of a bearing cup shown in Fig 5, drawn to a larger scale.

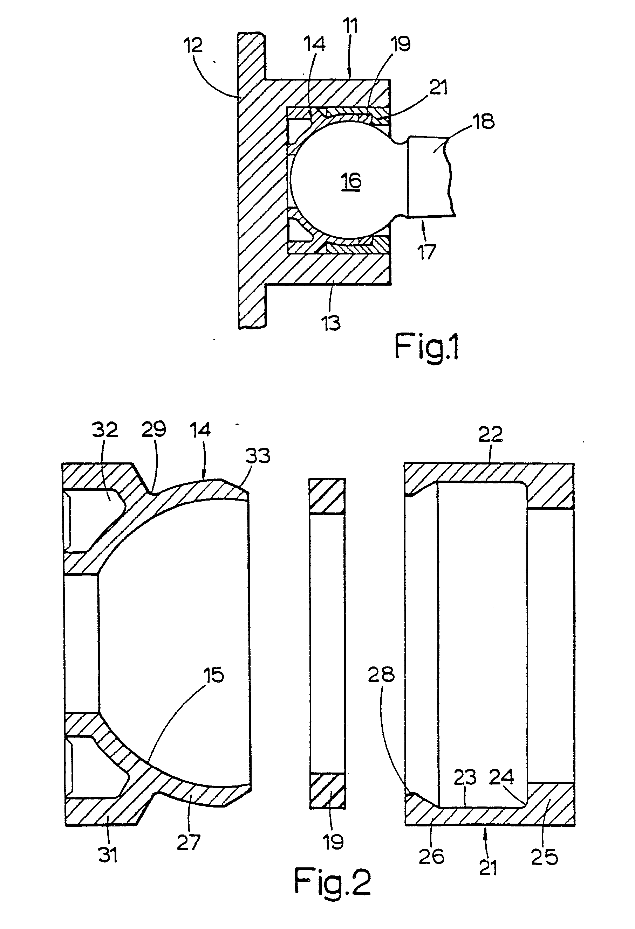

With reference to Figs 1 and 2, the ball and socket joint shown includes a cup shaped housing 11 having a base 12 and a cylindrical wall 13. A bearing cup 14 is located in the housing 11 and has a bearing surface 15 for supporting the part spherical head of a ball pin 17. The shank 18 of the ball pin 17 extends through the open end of the housing 11, the ball pin being capable of pivotal and rotational movement in the bearing cup 14.

An annular seal 19 of rubber or similar material is positioned between the open end of the housing and the bearing surface 15 is retained by radially deformable remaining means in the form of a retaining ring 21. The external cylindrical surface 22 of the retaining ring 21 is supported by the wall 13 of the housing 11 and an internal cylindrical surface 23 supports the seal 19 radially. The seal 19 is located against the rim of the bearing cup 14 by the internal radial surface 24 of a flange 25 on the retaining ring 21.

A rim portion 26 of the retaining ring 21 engages over a rim portion 27 of the bearing cup 14. To secure the retaining ring 21 in the socket housing 11 a radial projection in the form of a rib 28 on the retaining ring engages with a corresponding recess in the form of a groove 29 in the bearing cup 14.

The bearing cup 14 and retaining ring 21 are made of a resilient plastics material, e.g. Nylon 6 or 66. To reduce material costs and maintain substantially even wall thicknesses, a cylindrical projection 31 provides location in the housing 12 and is supported by radial webs 32.

To assemble the joint, the ball pin head 16 is located in the bearing cup 14 and the seal 19 and retaining ring 21 are passed over the ball pin shank 18. The retaining ring 21 is then pushed into position on the bearing cup 21, a chamfer 33 forcing the rim portion 26 of the retaining ring 21 to deform radially before the rib 28 snaps into the groove 29.

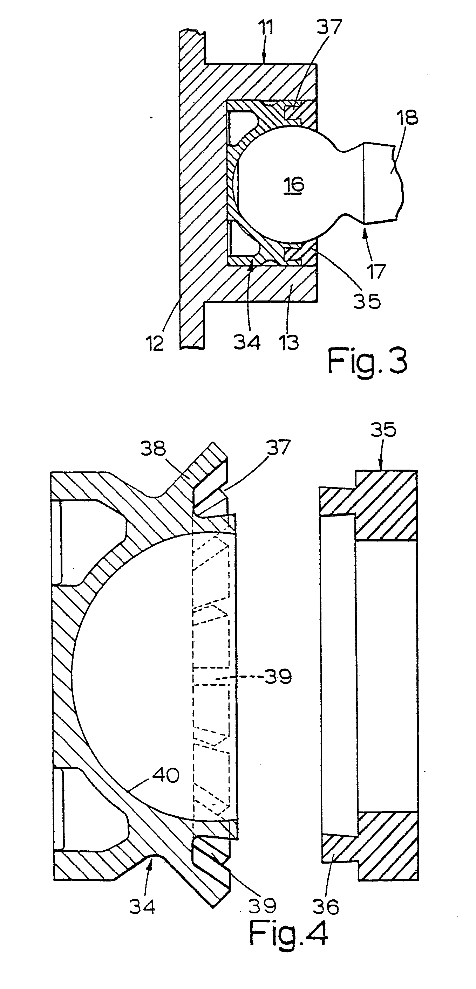

In the ball and socket joint shown in Figs. 3 and 4 the socket housing 11 and ball pin 17 are subtantially identical to those shown in Figs. 1 and 2 and will retain the same reference numerals. A bearing cup 34 is generally similar to bearing cup 14 and is also of resilient plastics material.

A seal 35 of rubber or similar material is of generally rectangular cross section with an axially projecting annular rib 36 of dovetail section on one side face. This rib 36 is engaged in a groove 37 in the rim portion of the bearing cup 14. The normally axially extending outer groove wall 38 is flared outwardly when the bearing cup is in its free state before insertion into the housing 11, i.e. as shown in Fig.4.

The outer groove wall 38 has axial slots 39 which, together with the resilience of the material, allow the outer groove wall 38 to act as radially deformable retaining means for the seal 35.

To assemble the ball and socket joint shown in Figs. 3 and 4, the ball pin head 16 is inserted into the bearing cup 34 and the seal 35 is passed over the ball pin shank 18 so that the rib 36 projects into the groove 37. These components are then pushed into the housing 11, the side wall 13 deforming the outer groove wall 38 radially to clench the rib 36 and thus retain the seal in position between the bearing surface 40 and the open end of the housing.

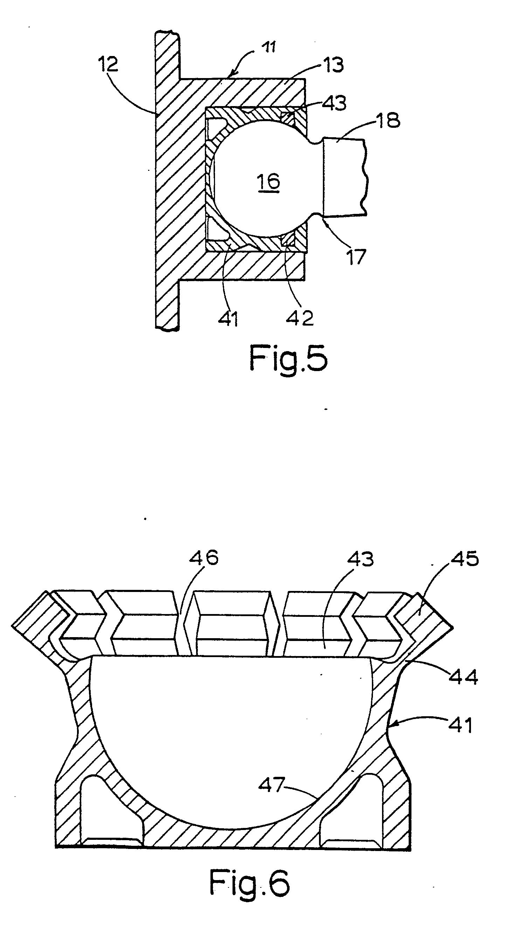

The ball and socket joint shown in Figs. 5 and 6 also uses a socket housing 11 and a ball pin 17 which are substantially identical to those shown in Figs. 1 and 2 and the same reference numerals will be retained. A bearing cup 41 is generally similar to bearing cups 14 and 34 shown in Figs. 1 to 4 and is also of resilient plastics material.

A seal 42 of rectangular cross-section is engaged in a groove 43 in the rim portion of the bearing cup 41, the normally axially extending outer groove wall 44 being flared outwardly when the bearing cup is in its free state before insertion into the housing 11, i.e. as shown in Fig. 6. A normally radially extending groove wall 45 on the side of the seal 42 away from the bearing surface 15 is formed integrally with the axially extending wall 44. Slots 46 in the groove walls 44 and 45 together with the resilience of the material allow the groove walls to act as radially deformable retaining means for the seal 42.

To assemble the ball and socket joint shown in Figs. 5 and 6, the ball pin head 16 is inserted into the bearing cup 41 and the seal 42 is passed over the ball pin shank 18 to lie loosely in the groove 43. These components are then pushed into the housing 11, the side wall 13 deforming the outer groove wall 44 radially to retain the seal in position between the bearing surface 47 and the open end of the housing.

The ball and socket joints according to the invention are particularly suited to use in a clutch release mechanism of a vehicle transmission in which case the housing 11 may be integral with the clutch bell housing or some other fixed transmission component. Hence the invention extends to an assembly of the parts described above for insertion into a housing.

## Claims

1. A ball and socket joint comprising a cup-shaped housing (11), a ball pin (17) having a shank (18) extending through the open end of the housing (11) and a part-spherical head (16), a bearing cup (14) located in the housing (11) and having a part-spherical bearing surface (15) for supporting the ball head (16) for pivotal and rotational movement of the ball pin (17), and an annular seal (19) in contact with the head (16) positioned between the open end of the housing (11) and the bearing surface (15), characterised in that the seal (19) is retained by a resilient retaining ring (21) which is radially deformable to snap-fit over the exterior of the bearing cup (14), the retaining ring (21) retaining the seal (19) when the bearing cup (14), the seal (19), the retaining ring (21), and the ball pin (17) are assembled in the housing (11).

2. A ball and socket joint according to Claim 1, characterised in that said retaining ring (21) has internal surfaces (23,24) which support and locate the seal (19) against the rim of the bearing cup (14) and a rim portion (26) which engages a rim portion (27) of the bearing cup (14), and an internal radial projection (28) extending radially inwardly on the rim portion (26) of the retaining ring engages with a corresponding external recess (29) in the rim portion (27) of the bearing cup.

3. A ball socket joint according to Claim 2, characterised in that the radial projection comprises an annular rib (28) and the corresponding recess comprises an annular groove (29).

4. A ball and socket joint comprising a cup-shaped housing (11) a ball pin (17) having a shank

(18) extending through the open end of the housing (11) and a part-spherical head (16), a bearing cup (34,41) located in the housing (11) and having a bearing surface (40,47) for supporting the ball head (16) for pivotal and rotational movement of the ball pin (17), and an annular seal (35,42) in contact with the head (16) is positioned between the open end of the housing and the bearing surface (40,47), characterised in that said bearing surface (40,47) has an integral wall portion (38,44) which is resiliently radially inwardly deformable, and the seal (35,42) is retained by inward deformation of the wall portion (38,44) upon mounting of the bearing cup (34,41), the seal (35,42) and the ball pin (17) in the housing (11).

5. A ball and socket joint according to Claim 4 characterised in that said wall portion (38,44) is a groove wall which is flared outwardly when the bearing cup (34,41) is in its free state before insertion into the housing (11).

6. A ball and socket joint according to Claim 5, characterised in that the groove wall (38,44) has axial slots (39,46).

7. A ball and socket joint according to Claim 6, characterised in that the seal (35) has an axially extending retaining rib (36) which is engaged by the groove wall (38).

8. A ball and socket joint according to Claim 5 or Claim 6, characterised in that a radially extending groove wall (45) is formed integrally with the axially extending groove wall (44) on the side of the seal (42) away from the bearing surface (47).

9. An assembly for use in a ball and socket joint according to any one of Claims 1 to 3, the assembly comprising
(i) the ball pin (16),
(ii) the bearing cup (14),
(iii) the annular seal (19), and
(iv) the resiliently deformable retaining ring (21);
said assembly being intended to be fitted in a cup-shaped housing (11) to form the ball and socket joint according to any one of Claims 1 to 3.

10. An assembly for use in a ball and socket joint according to any one of Claims 4 to 8, the assembly comprising
(i) the ball pin (16),
(ii) the bearing cup (34,41), and
(iii) the annular seal (35,42);
said assembly being intended to be fitted in a cup-shaped housing (11) to form the ball and socket joint according to any one of Claims 4 to 8.

**Patentansprüche**

1. Kugelgelenk mit einem napfförmigen Gehäuse (11), einem Kugelstiel (17), der einen Schaft (18), der sich durch gas offene Ende des Gehäuses (11) erstreckt, und einen Teilkugelkopf (16) hat, einer Lagerschale (14), die in dem Gehäuse (11) angeordnet ist und eine teilkugelförmige Lagerfläche (15) zum Lagern des Kugelkopfes (16) für eine Schwenk- und Drehbewegung des Kugelstieles (17) hat, und einer ringförmigen Dichtung (19) in Kontakt mit dem Kopf (16), die zwischen dem offenen Ende des Gehäuses (11) und der Lagerfläche (15) angeordnet ist, dadurch gekennzeichnet, daß die Dichtung (19) durch einen elastischen Haltering (21) zurückgehalten wird, der radial verformbar ist, um über das Äußere der Lagerschale (14) einzuschnappen, wobei der Haltering (21) die Dichtung (19) zurückhält, wenn die Lagerschale (14), die Dichtung (19), der Haltering (21) und der Kugelstiel (17) in dem Gehäuse (11) zusammengebaut sind.

2. Kugelgelenk nach Anspruch 1, dadurch gekennzeichnet, daß der Haltering (21) Innenflächen (23, 24), welche die Dichtung (19) abstützen und an den Rand der Lagerschale (14) halten, und einen Randabschnitt (26) hat, der an einem Randabschnitt (27) der Lagerschale (14) angreift, und ein innerer Radialvorsprung (28), der am Randabschnitt (26) des Halterings radial nach innen verläuft, in eine entsprechende äußere Ausnehmung (29) in dem Randabschnitt (27) der Lagerschale eingreift.

3. Kugelgelenk nach Anspruch 2, dadurch gekennzeichnet, daß der Radialvorsprung eine ringförmige Rippe (28) aufweist und die entsprechende Ausnehmung eine ringförmige Nut (29) aufweist.

4. Kugelgelenk mit einem napfförmigen Gehäuse (11), einem Kugelstiel (17), der einen Schaft (18), der sich durch das offene Ende des Gehäuses (11) erstreckt, und einen Teilkugelkopf (16) hat, einer Lagerschale (34,41), die in dem Gehäuse (11) angeordnet ist und eine Lagerfläche (40,47) zum Lagern des Kugelkopfes (16) für eine Schwenk- und Drehbewegung des Kugelstieles (17) hat, und einer Ringdichtung (35,47) in Kontakt mit dem Kopf (16), die zwischen dem offenen Ende des Gehäuses und der Lagerfläche (40,47) angeordnet ist, dadurch gekennzeichnet, daß die Lagerfläche (40,47) einen integralen Wandabschnitt (38,44) hat, der elastisch radial nach innen verformbar ist, und die Dichtung (35,42) durch eine Einwärtsverformung des Wandabschnittes (38,44) nach dem Einbauen der Lagerschale (38,41), der Dichtung (35,42) und des Kugelstieles (17) in das Gehäuse (11) gehatlen wird.

5. Kugelgelenk nach Anspruch 4, dadurch gekennzeichnet, daß der Wandabschnitt (38,44) eine Nutwand ist, die sich nach außen konisch erweitert, wenn die Lagerschale (34,41) im unbelasteten Zustand vor der Einführung in das Gehäuse (11) ist.

6. Kugelgelenk nach Anspruch 5, dadurch gekennzeichnet, daß die Nutwand (38,44) Axialschlitze (39,46) hat.

7. Kugelgelenk nach Anspruch 6, dadurch gekennzeichnet, daß die Dichtung (35) eine axial sich erstreckende Halterippe (36) hat, an welcher die Nutwand (38) angreift.

8. Kugelgelenk nach Anspruch 5 oder Anspruch 6, dadurch gekennzeichnet, daß eine radial sich erstreckende Nutwand (45) einstückig mit der axial sich erstreckenden Nutwand (44) auf der Lagerfläche (47) abgekehrten Seite der Dichtung (42) gebildet ist.

9. Anordnung zur Verwendung in einem Kugelgelenk nach irgendeinem der Ansprüche 1 bis 3, mit

(i) dem Kugelstiel (16),
(ii) der Lagerschale (14),
(iii) der Ringdichtung (19) und
(iv) dem elastisch verformbaren Haltering (21),.

wobei die Anordnung dafür bestimmt ist, in ein napförmiges Gehäuse (11) eingebaut zu werden, um das Kugelgelenk nach irgendeinem der Ansprüche 1 bis 3 zu bilden.

10. Anordnung zur Verwendung in einem Kugelgelenk nach irgendeinem der Ansprüche 4 bis 8, mit

(i) dem Kugelstiel (16),
(ii) der Lagerschale (34,41) und
(iii) der Ringdichtung (35,42),

wobei die Anordnung dafür bestimmt ist, in ein napförmiges Gehäuse (11) eingebaut zu werden, um das Kugelgelenk nach irgendeinem der Ansprüche 4 bis 8 zu bilden.

**Revendications**

1. Joint à rotule comprenant un boîtier (11) en forme de cuvette, une tige à rotule (17) comportant uen queue (18) qui traverse l'extrémité ouverte du boîtier (11) et une tête (16) en forme de partie de sphère, une cuvette de portée (14) logée dans le boîtier (11) et possédant une surface de portée (16) en forme de partie de sphère destinée à donner appui à la tête de rotule (16) pour permettre un mouvement de pivotement et de rotation de la tige (17), et une garniture d'étanchéité annulaire (19) én contact avec la tête (16) positionée entre l'extrémité ouverté du boîtier (11) et la surface de portée (15), caractérisé en ce que la graniture d'étanchéité (19) est retenue par une bague de retenue élastique (21) qui peut se déformer radialement pour s'encliqueter par dessus la surface externe de la cuvette de portée (14), la bague de retenue (21) retenant la garniture d'étanchéité (19) lorsque la cuvette de portée (14), la garniture d'étanchéité (19), la bague de retenue (21) et la tige à rotule (16) sont assemblées dans le boîtier (11).

2. Joint à rotule selon la revendication 1, caractérisé en ce que ladite bague de retenue (21) présente des surfaces internes (23, 24) qui donne appui à la garniture d'étanchéité (19) et la positionnent contre le rebord de la cuvette de portée (14), et une partie de rebord (26) qui coopère avec une partie de rebord (27) de la cuvette de portée (14), et en ce qu'une saillie radiale intérieure (28) qui s'étend radialement vers l'intérieur sur la partie de rebord (26) de la bague de retenue coopère avec un évidement extérieur correspondant (29) ménagé dans la partie de rebord (27) de la cuvette de portée.

3. Joint à rotule selon la revendication 2, caractérisé en ce que la saillie radiale constitue une nervure annulaire (28) et l'évidement correspondant est constitué par une gorge annulaire (29).

4. Joint à rotule comprenant un boîtier (11), une tige à rotule (17) comportant une queue (18) qui passe à travers l'extrémité ouverte de boîtier (11) et une tête (16) en forme de partie de sphère, une cuvette de portée (34, 41) placée dans le boîtier (11) et possédant une surface de portée (40, 47) destinée à donner appui à la tête de rotule (16) pour permettre un mouvement de pivotement et de rotation de la tige à rotule (17), et une garniture d'étanchéité annulaire (35, 42) en contact avec la tête (16) est positionée ente l'extrémité ouverte du boîtier et la surface de portée (40, 47), caractérisé en ce que ladite surface de portée (40, 47) comporte une partie de paroi d'une seule pièce (38, 44) qui peut être déformée élastiquement radialement vers l'intérieur, et en ce que la garniture d'étanchéité (35, 42) est retenue par déformation de la partie de paroi (38, 44) vers l'intérieur lors du montage de la cuvette de portée (34, 41), de la garniture d'étanchéité (35, 42) et de la tige à rotule (17) dans le boîtier (11).

5. Joint à rotule selon la revendication 4, caractérisé en ce que ladite partie de paroi (38, 44) est une paroi de gorge qui est évasée vers l'extérieur lorsque la cuvette de portée (34, 41) se trouve à l'état détendu avant son insertion dans le boîtier (11).

6. Joint à rotule selon la revendication 5, caractérisé en ce que la paroi de gorge (38, 44) comporte des fentes axiales (39, 46).

7. Joint à rotule selo la revendication 6, caractérisé en ce que la garniture d'étanchéité (35) comporte une nervure de retenue (36) en saillie axiale qui coopère avec la paroi de gorge (38).

8. Joint à rotule selon la revendication 5 ou la revendication 6, caractérisé en ce qu'une partie de paroi (45) s'étendant radialement est formée d'une seule pièce avec la partie de paroi (44) s'étendant axialement, sur le côté de la garniture d'étanchéité (42) qui est le plus éloigné de la surface de portée (47).

9. Ensemble destiné à être utilisé dans un joint à rotule selon une quelconque des revendications 1 à 3, l'ensemble comprenant:

(i) la tige à rotule (16),
(ii) la cuvette de protée (14),
(iii) la rainure d'étanchéité annulaire (19), et
(iv) la bague de retenue élastiquement déformable (21);

cet ensemble étant destiné à être monté dans un boîtier (11) en forme de cuvette pour former le joint à rotule selon une quelconque des revendications 1 à 3.

10. Ensemble destiné à être utilisé dans un joint à rotule selon l'une quelconque des revendications 4 à 8, l'ensemble comprenant:

(i) la tige à rotule (16),
(ii) la cuvette de portée (34, 41), et
(iii) la garniture d'étanchéité annulaire (35, 42);

ledit ensemble étant destiné à être monté dans un boîtier (11) en forme de cuvette pour former le joint à rotule selon une quelconque des revendications 4 à 8.

0  082  638

Fig.1

Fig.2

Fig. 3

Fig. 4

Fig.5

Fig.6